# EUROPÄISCHE PATENTSCHRIFT

(11) **EP 3 385 932 B1**
(45) Veröffentlichungstag und Bekanntmachung des Hinweises auf die Patenterteilung: **03.11.2021**
(21) Anmeldenummer: 18165033.4
(22) Anmeldetag: 29.03.2018
(51) Int. Cl.: G08G 1/0962, B60K 35/00, G01C 21/36, G08G 1/16

(54) **TECHNIK ZUR AUSGABE VON FAHRZEUGMELDUNGEN**
TECHNOLOGY FOR ISSUING VEHICLE MESSAGES
TECHNIQUE D'ÉMISSION DE MESSAGES PROVENANT DE VÉHICULE

(30) Priorität: 07.04.2017 DE 102017003399
(43) Veröffentlichungstag der Anmeldung: 10.10.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE); Ochs, Thomas, 82178 Puchheim (DE)
(74) Vertreter: v. Bezold & Partner Patentanwälte - PartG mbB

(56) Entgegenhaltungen:
- US-A1- 2010 117 812
- US-A1- 2014 152 774
- US-B1- 7 161 616

## Beschreibung

Die vorliegende Erfindung betrifft eine Technik zur Ausgabe von Meldungen eines Kraftfahrzeugs. Insbesondere sind eine Vorrichtung zur Ausgabe der Fahrzeugmeldungen an einem Fahrerplatz des Kraftfahrzeugs und ein mit einer solchen Vorrichtung ausgestattetes Kraftfahrzeug beschrieben.

Das Dokument US 7 161 616 B1 beschreibt das Erzeugen eines künstlichen Bildes aus einem virtuellen über einem Fahrzeug liegenden Blickwinkel basierend auf mehreren Kamerabildern, welche die Umgebung des Fahrzeugs erfassen.

Die Fahrer eines Kraftfahrzeugs, insbesondere eines Nutzfahrzeugs, sind einer Vielzahl an Meldungen ausgesetzt, die mit zunehmender Funktionalität und Komplexität des Kraftfahrzeugs auch immer spezifischer werden. In bestehenden Anzeigen, z.B. eines Kombinationsinstruments, werden Fahrzeugmeldungen häufig aus dem Kontext gerissen und zusammenhangslos als Symbol oder Piktogramm eingeblendet. Der Fahrer muss, falls ihm die Bedeutung dieses Signals nicht bekannt ist, im Handbuch nachschlagen und selbst den Bezug zum Fahrzeugkontext herstellen. Beispielsweise wird trotz eines einfachen Fehlerfalls, wie einer fehlerhaften Rückleuchte, häufig eine abstrakte Fehlermeldung ausgegeben, beispielsweise durch ein Lampensymbol oder ein Textfeld "Rückleuchte defekt". Dem Fahrer wird aber nicht angezeigt, wo sich die Rückleuchte genau befindet. Selbst wenn Ortsangaben wie "rechts" oder "links" enthalten sind, ist die Meldung nicht eindeutig und der Fahrer muss die Meldung durch Inaugenscheinnahme vervollständigen.

Dies trifft umso mehr bei seltenen oder komplexen Fehlersituationen zu. Beispielsweise kann das herkömmliche, symbolische oder textbasierte Anzeigen einer Fahrzeugkomponente, die je nach Fahrzeugtyp an unterschiedlichen Stellen im Kraftfahrzeug eingebaut ist, zu Verzögerungen und vergeblichen Arbeitsschritten führen. Die Mehrdeutigkeit wird noch weiter vergrößert und zum Sicherheitsrisiko, da sowohl fahrzeugbezogene Meldungen als auch verkehrsbezogene Meldungen in der herkömmlichen Weise angezeigt werden.

Somit besteht die Aufgabe, eine Technik anzugeben, die dem Fahrer auf einer begrenzten Sichtfläche spezifische Fahrzeugmeldungen eindeutig anzeigt. Eine Alternative oder weitere Aufgabe ist, verschiedene Fahrzeugmeldungen in einem stetig zusammenhängenden Kontext und nicht sprunghaft anzuzeigen.

Diese Aufgabe oder Aufgaben werden durch eine Technik mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß der Erfindung ist eine Vorrichtung zur Ausgabe von Fahrzeugmeldungen bereitgestellt. Die Vorrichtung ist ausgebildet, die Fahrzeugmeldungen an einem Fahrerplatz eines Kraftfahrzeugs auszugeben.

Die Vorrichtung umfasst eine Steuerungseinheit, die dazu ausgebildet ist, eine oder mehrere Fahrzeugmeldungen von einer Vielzahl von Quellen des Kraftfahrzeugs zu erhalten und jeweils einer räumlichen Position relativ zum Kraftfahrzeug zuzuordnen. Die Vorrichtung umfasst ferner eine von der Steuerungseinheit gesteuerte Anzeigeeinheit, die dazu ausgebildet ist, eine perspektivische Darstellung des Kraftfahrzeugs mit mindestens einer der erhaltenen Fahrzeugmeldungen an der zugeordneten räumlichen Position anzuzeigen, wobei die angezeigte Perspektive des Kraftfahrzeugs von der zugeordneten räumlichen Position abhängt. Indem die perspektivische Darstellung des Kraftfahrzeugs die der Fahrzeugmeldung zugeordnete Position umfasst und die Perspektive der Darstellung von der zugeordneten Position abhängt, ist dem Fahrer die Aufgabe abgenommen, der Fahrzeugmeldung einen Ort zuzuordnen. So kann anhand der Darstellung des Kraftfahrzeugs (beispielsweise im Falle des Rücklichtdefekts) die der Fahrzeugmeldung entsprechende Position (beispielsweise die richtigen Stelle des defekten Rücklichts) in der Darstellung umfasst, zentriert und/oder gekennzeichnet sein.

Die Anzeigeeinheit kann am Fahrerplatz angeordnet oder anordenbar sein. Die verschiedenen, von der zugeordneten räumlichen Position abhängigen Perspektiven können in derselben begrenzten Sichtfläche (auch: Sichtfeld) der Anzeigeeinheit angezeigt werden. Durch die an die anzuzeigende Fahrzeugmeldung angepasste Perspektive können unterschiedliche funktionelle, sachliche und/oder örtliche Bezüge zum Kraftfahrzeug ausgeben werden, ohne eine zusätzliche Sichtfläche zu erfordern. Die Technik kann das Ergänzen von funktionellen, sachlichen und/oder örtlichen Bezügen ohne Vergrößerung der Sichtfläche ermöglichen.

Die Anzeigeeinheit kann durch ein Kombinationsinstrument, ein Sekundärdisplay und/oder ein Head-Up-Display realisiert sein. Die Anzeigeeinheit kann eine Anzeigefläche als Sichtfläche (beispielsweise eine Matrix mit Licht-emittierenden Dioden) und/oder einen Projektor (beispielsweise eines Head-Up-Displays mit einer reflektierenden Sichtfläche) umfassen. Die Anzeigefläche (beispielsweise des Kombinationsinstruments) kann am Fahrerplatz in Fahrtrichtung hinter dem Lenkrad oder (beispielsweise als Sekundärdisplay) an einer Mittelkonsole des Fahrerplatzes angeordnet sein.

Die Fahrzeugmeldung kann einen Status einer Fahrzeugkomponente, einen Fehler einer Fahrzeugkomponente, einen Hinweis auf eine Verkehrssituation oder eine Warnung in Bezug auf die Fahraufgabe des Fahrers betreffen oder ausgeben.

Ein Übergang zwischen der Ausgabe verschiedener Fahrzeugmeldungen kann durch eine stetige Veränderung der Perspektive implementiert sein. Insbesondere kann sich die perspektivische Darstellung in dem der jeweiligen Fahrzeugmeldung entsprechenden Kontext desselben (nämlich des eigenen) Kraftfahrzeugs bewegen. Ein unstetiger oder animierter Wechsel der Anzeige zwischen Einzelanzeigen oder funktionsspezifischen Anzeigen, oder ein Navigieren in verschiedenen Anzeigenstrukturen, ist dadurch vermeidbar.

Die Vorrichtung kann stets dem Kontext der Fahraufgabe des Fahrers folgen. Die Perspektive der Darstellung kann sich dynamisch dem Kontext der Fahraufgabe anpassen. Die Vorrichtung kann eine dynamische (und optional schematische) Anzeige des eigenen Kraftfahrzeugs (insbesondere des Nutzfahrzeugs) ermöglichen, das perspektivisch in den Kontext der Fahraufgabe, in dem sich der Fahrer des Kraftfahrzeugs befindet, eingebunden ist. Sämtliche Fahrzeugmeldungen (beispielsweise betreffend Funktionen, Warnungen und/oder Defekte, und andere Meldungen) können in der Darstellung mittels einer dynamischen Perspektive integriert sein.

Die Perspektive der perspektivischen Darstellung kann durch eine Projektionsrichtung (auch: Bildachse oder Blickrichtung der perspektivischen Darstellung, beispielsweise die Richtung aller Projektionsstrahlen bei einer Parallelprojektion oder die Richtung senkrecht zur Projektionsfläche, insbesondere bei einer Zentralprojektion) und/oder ein Projektionszentrum (auch: Blickpunkt der perspektivischen Darstellung oder einen Standort) definiert sein. Die perspektivische Darstellung des Kraftfahrzeugs kann einer Projektion der räumlichen Anordnung des Kraftfahrzeugs oder von Teilen des Kraftfahrzeugs entlang Projektionsstrahlen entsprechen.

Die perspektivische Darstellung kann eine schematische Darstellung des Kraftfahrzeugs umfassen. Die perspektivische Darstellung kann eine Projektion einer schematischen, räumlichen Darstellung des Kraftfahrzeugs oder Teile des Kraftfahrzeugs umfassen. Die Projektion kann eine Parallelprojektion (beispielsweise mit parallelen Projektionsstrahlen), eine Zentralprojektion (beispielsweise mit sich in einem Zentrum schneidenden Projektionsstrahlen) oder eine nichtlineare Projektion (beispielsweise mit tonnenförmiger Verzeichnung und/oder gekrümmten Projektionsstrahlen) sein. Die perspektivische Darstellung kann, abhängig von der durch die zugeordnete räumliche Position bestimmten Perspektive, eine Seitenansicht (d.h. die Bildachse ist horizontal und senkrecht zur Fahrtrichtung des Kraftfahrzeugs) oder eine Draufsicht (d.h. die Bildachse ist vertikal) des Kraftfahrzeugs umfassen.

Die Quellen der Fahrzeugmeldungen können ein Fahrassistenzsystem und/oder Statussensoren des Kraftfahrzeugs umfassen. Die Statussensoren können Verschleißsensoren (beispielsweise eines Bremsbelags), Belastungssensoren (beispielsweise einer Achslast) und/oder Stellungssensoren zu manuell oder automatisch verstellbaren Fahrzeugkomponenten (beispielsweise eine höhenverstellbare Luftfederung oder anstellbare Luftleitflächen an der Fahrzeughaut, insbesondere einen Spoiler auf dem Dach eines LKWs oder einer Sattelzugmaschine) umfassen. Die Meldungen weiterer interner oder externer Quellen des Kraftfahrzeugs können in die perspektivische Darstellung integriert sein und/oder dem Steuern der Perspektive der Darstellung zugrunde liegen.

Die Fahrzeugmeldung wird durch eine hervorgehobene Fahrzeugkomponente an der zugeordneten räumlichen Position angezeigt.

Die Hervorhebung der Fahrzeugkomponente kann eine von umgebenden Fahrzeugkomponenten (beispielsweise umgebenden Fahrzeugteilen) abweichende Farbe, Helligkeit und/oder Transparenz der hervorgehobenen Fahrzeugkomponente umfassen. Beispielsweise können in Blickrichtung vor oder über der hervorgehobenen Fahrzeugkomponente liegende Fahrzeugkomponenten in der perspektivischen Darstellung fehlen oder transparent sein. Alternativ oder ergänzend kann die Hervorhebung eine Umrandung oder Markierung, beispielsweise der Kanten der hervorgehobenen Fahrzeugkomponente, umfassen.

Die Anzeigeeinheit kann ferner dazu ausgebildet sein, die Perspektive in Reaktion auf die Fahrzeugmeldung stetig zu verändern. Die Perspektive kann ausgehend von einer von einer ersten Fahrzeugmeldung oder einem ersten Betriebszustand des Kraftfahrzeugs abhängigen ersten Perspektive stetig oder kontinuierlich verändert werden zu einer von einer zweiten Fahrzeugmeldung oder einem zweiten Betriebszustand des Kraftfahrzeugs abhängigen zweiten Perspektive.

Die Perspektive der Darstellung kann durch die Bildachse und/oder einen Bildausschnitt bestimmt sein. Die Perspektive kann durch einen Bildausschnitt, dessen Größe von einer Größe der darin angezeigten Fahrzeugmeldung abhängt, bestimmt sein. Die Größe des Bildausschnitts kann von einer Größe des Symbols oder der Hervorhebung, beispielsweise von der Größe der hervorgehobenen Fahrzeugkomponente, abhängen.

Die Perspektive kann durch eine Bildachse bestimmt sein, auf welcher die zugeordnete räumliche Position liegt. Ferner kann auf der Bildachse ein Mittelpunkt des Kraftfahrzeugs liegen. Der Mittelpunkt kann eine Fahrerkabine des Kraftfahrzeugs oder der Fahrerplatz sein. Alternativ oder ergänzend kann die Perspektive durch eine Bildachse bestimmt sein, die senkrecht zu einer Verbindungslinie der zugeordneten räumlichen Position und des Mittelpunkts des Kraftfahrzeugs ist. Die Bildachse kann die Verbindunglinie von zugeordneter räumlicher Position und Mittelpunkt des Kraftfahrzeugs senkrecht schneiden. Alternativ oder ergänzend kann die Perspektive durch eine Bildachse bestimmt sein, auf welcher die zugeordnete räumliche Position liegt, und deren horizontale Komponente parallel zur Fahrtrichtung oder Längsrichtung des Kraftfahrzeugs ist.

Die Fahrzeugmeldung kann eine Warnmeldung zu einem (beispielsweise unbemerkten) Rückwärtsrollen des Kraftfahrzeugs umfassen. Die zugeordnete räumliche Position kann ein Heck des Kraftfahrzeugs und/oder einen Fahrweg hinter dem Kraftfahrzeug umfassen. Rollt das Kraftfahrzeug rückwärts, kann die die Perspektive bestimmende Position die Rückseite des Kraftfahrzeugs umfassen und der Standort der Darstellung kann hinter dem Kraftfahrzeug sein.

Die zugeordnete räumliche Position kann von der Quelle der Fahrzeugmeldung abhängig sein. Die Quelle der Fahrzeugmeldung kann einen Sensor umfassen. Die Fahrzeugmeldung kann einen vom Sensor erfassten oder davon abgeleiteten Wert, oder ein vom erfassten Wert abgeleitetes Symbol, umfassen.

Die Quellen der Fahrzeugmeldung können mindestens einen Sensor zur Erfassung eines Objekts in der Umgebung des Kraftfahrzeugs umfassen. Der Sensor kann einen Abstand, eine Geschwindigkeit, eine Größe, eine Form und/oder eine (beispielsweise stoffliche) Zusammensetzung des Objekts erfassen. Die Quellen der Fahrzeugmeldung können eine Laser-basierte Ortung und Abstandsmessung (auch: LiDAR), einen Radarsensor, eine Stereokamera und/oder einen Ultraschallsensor des Kraftfahrzeugs umfassen.

Die zugeordnete räumliche Position (beispielsweise der Bildausschnitt) kann eine Position des Sensors, die vom Sensor erfasste Umgebung und/oder eine Position des erfassten Objekts umfassen. Alternativ oder ergänzend kann die Bildachse einer Erfassungsrichtung des Sensors entsprechen. Beispielsweise kann die Bildachse der Verbindunglinie vom Sensor zum erfassten Objekt entsprechen.

Die Steuerungseinheit kann ferner dazu ausgebildet sein, aufgrund des Abstands, der Geschwindigkeit, der Größe, der Form und/oder der Zusammensetzung des Objekts einen Objekttyp zu bestimmen. Die Fahrzeugmeldung kann den Objekttyp umfassen. Beispielsweise kann der Objekttyp durch das Symbol angezeigt sein. Alternativ oder in Kombination kann die Fahrzeugmeldung einen Wert des erfassten Abstands und/oder der erfassten Geschwindigkeit umfassen.

Die Fahrzeugmeldung kann durch Überschreiten eines Grenzwerts einer Annäherungsgeschwindigkeit (d.h. einer negativen Relativgeschwindigkeit), durch einen Kollisionspunkt zwischen vorausberechneten Trajektorien des Objekts und des Kraftfahrzeugs und/oder durch Unterschreiten eines Grenzwerts des Abstands (beispielsweise durch die Steuerungseinheit) ausgelöst werden.

Die Anzeigeeinheit kann ferner dazu ausgebildet sein, bei Abwesenheit einer Fahrzeugmeldung und/oder nach einer Bestätigung der angezeigten Fahrzeugmeldung die perspektivische Darstellung des Kraftfahrzeugs anzuzeigen mit einer vom Betriebszustand oder der Fahrtrichtung des Kraftfahrzeugs abhängigen Perspektive. Beispielsweise kann die Bildachse der Perspektive in einer vertikalen Ebene angeordnet sein, die parallel zur Längsrichtung des Kraftfahrzeugs ist oder die parallel zur Fahrtrichtung ist.

Gemäß einem weiteren Aspekt ist ein Kraftfahrzeug, insbesondere ein Nutzfahrzeug, bereitgestellt. Das Kraftfahrzeug umfasst eine Vorrichtung gemäß dem vorgenannten Aspekt.

Das Kraftfahrzeug kann (beispielsweise als die Quellen der Fahrzeugmeldung) eine Vielzahl an Sensoren zur Überwachung verschiedener Umgebungsbereiche des Kraftfahrzeugs umfassen. Das Kraftfahrzeug kann ferner (beispielsweise als die Quellen der Fahrzeugmeldung) mehrere funktional verschiedene Regelungen umfassen. Die funktional verschiedenen Regelungen können Signale von den Sensoren erfassen und verarbeiten. Die Regelungen können eine Längsführung und/oder Querführung des Kraftfahrzeugs umfassen. Die Regelungen können einen Antrieb, Bremsen und/oder eine Lenkung des Kraftfahrzeugs steuern.

Das Kraftfahrzeug kann ein Nutzfahrzeug (beispielsweise ein Lastkraftwagen zur Güterbeförderung und/oder ein Bus zur Personenbeförderung) oder ein Personenkraftwagen sein. Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Aufsicht eines exemplarischen Kraftfahrzeugs mit einem Ausführungsbeispiel einer Vorrichtung zur Ausgabe von Fahrzeugmeldungen an einem Fahrerplatz;
- Figur 2: schematisch eine Veränderung einer perspektivischen Darstellung an einer Anzeigeeinheit der Vorrichtung gemäß einer ersten Implementierung;
- Figur 3: schematisch eine Folge von Veränderungen der perspektivischen Darstellung an der Anzeigeeinheit der Vorrichtung gemäß einer zweiten Implementierung;
- Figur 4: schematisch eine von Fahrzeugmeldungen abhängige Perspektive der Darstellung gemäß einer dritten Implementierung;
- Figur 5: schematisch eine von Fahrzeugmeldungen abhängige Perspektive der Darstellung gemäß einer vierten Implementierung;
- Figur 6: schematisch eine von Fahrzeugmeldungen abhängige Perspektive der Darstellung gemäß einer fünfte Implementierung;
- Figur 7: schematisch eine von Fahrzeugmeldungen abhängige Perspektive der Darstellung gemäß einer sechsten Implementierung; und
- Figur 8: schematisch einen Fahrerplatz eines Kraftfahrzeugs mit einem Ausführungsbeispiel der Vorrichtung.

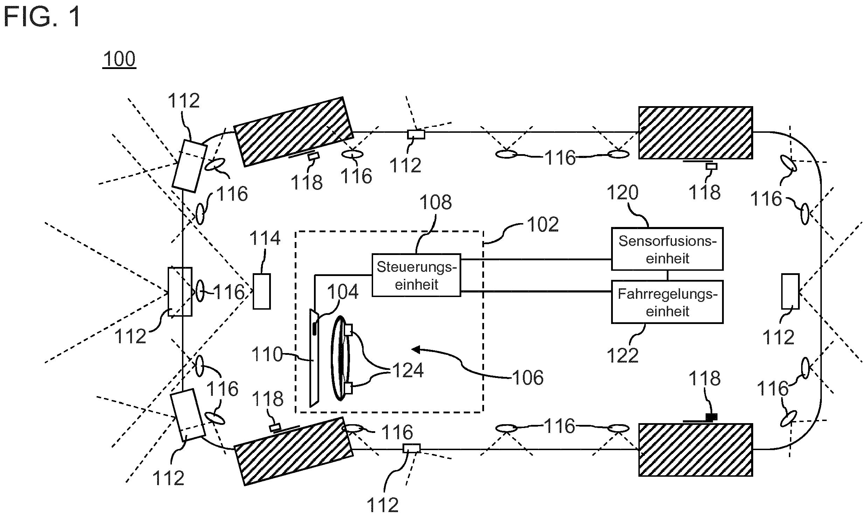

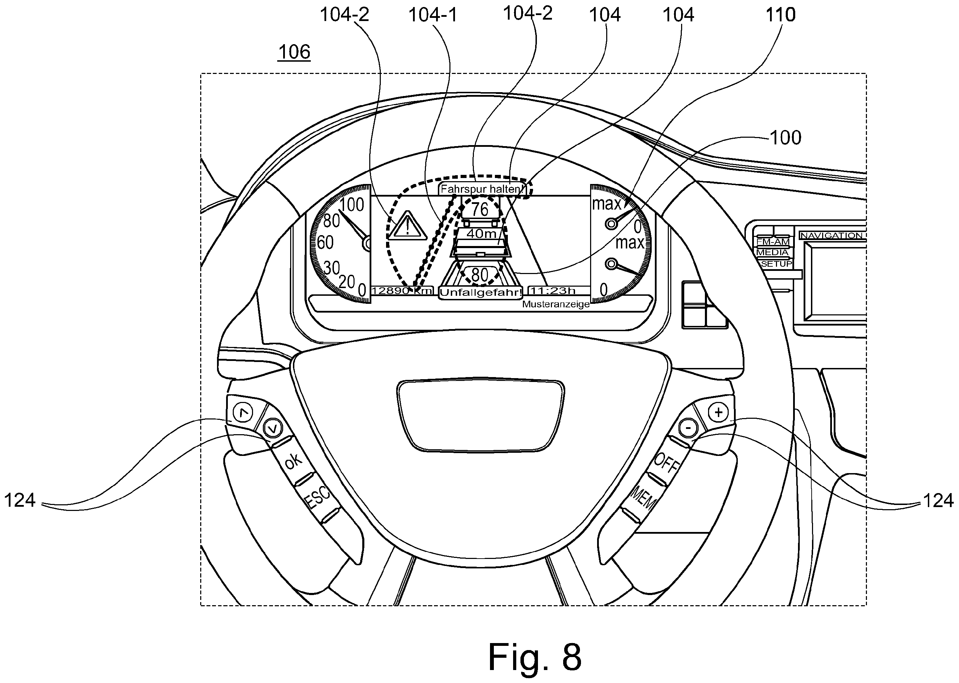

Die Erfindung entspricht dem Ausführungsbeispiel der Figur 8. Die anderen offenbarten Ausführungsbeispiele stellen Beispiele dar, die nicht unter den Schutzumfang der Ansprüche fallen. Figur 1 zeigt schematisch ein Kraftfahrzeug 100 mit einem Ausführungsbeispiel einer allgemein mit Bezugszeichen 102 versehenen Vorrichtung zur Ausgabe von Fahrzeugmeldungen 104 an einem Fahrerplatz 106 des Kraftfahrzeugs 100. Die Vorrichtung 102 umfasst eine Steuerungseinheit 108, die dazu ausgebildet ist, eine oder mehrere Fahrzeugmeldungen 104 von einer Vielzahl von Quellen des Kraftfahrzeugs 100 zu erhalten und jeweils einer räumlichen Position relativ zum Kraftfahrzeug zuzuordnen. Die Vorrichtung 102 umfasst ferner eine von der Steuerungseinheit 108 gesteuerte Anzeigeeinheit 110, die dazu ausgebildet ist, eine perspektivische Darstellung des Kraftfahrzeugs 100 mit mindestens einer der erhaltenen Fahrzeugmeldungen 104 an der zugeordneten räumlichen Position anzuzeigen, wobei die angezeigte Perspektive des Kraftfahrzeugs 100 von der zugeordneten räumlichen Position abhängt.

Die Quellen der Fahrzeugmeldungen 104 können Fahrzeugsensoren 112 bis 118, mit den Fahrzeugsensoren verbundene Auswerteeinheiten 120 und 122 und/oder Bedienelemente 124 umfassen. Beispielsweise sind eine Sensorfusionseinheit 120 und/oder eine Fahrregelungseinheit 122 mit den Sensoren 112 bis 118 verbunden. Die Sensorfusionseinheit 120 erfasst Objekte in der Umgebung des Kraftfahrzeugs 100 aufgrund von Signalen von zwei oder mehr der Sensoren. Beispielsweise wird dem erfassten Objekt ein Objekttyp zugeordnet. Die Fahrregelungseinheit 122 kann auf Grundlage der Signale von den Sensoren und/oder der von der Sensorfusionseinheit 120 erfassten Objekte das Kraftfahrzeug 100 fahren. Beispielsweise umfasst die Fahrregelungseinheit 122 eine Regelung des Antriebs und der Bremsen für eine Längsführung des Kraftfahrzeugs 100 und/oder eine Regelung der Lenkung für eine Querführung des Kraftfahrzeugs 100.

In dem in Figur 1 gezeigten Ausführungsbeispiel umfassen die Sensoren Radarsensoren 112 (die beispielsweise an einer Front und einem Heck des Kraftfahrzeugs 100 angeordnet sind), Stereokameras 114, Ultraschallsensoren 116 (die beispielsweise an einer Außenhaut des Kraftfahrzeugs 100 angeordnet sind) und/oder Drehzahlsensoren 118 (beispielsweise mit Abgriff am Rad oder Getriebe). Mittels der Sensoren 112 bis 116 kann der Abstand zum vorausfahrenden Fahrzeug erfasst werden. Die Fahrregelungseinheit 122 kann eine Abstandsregelung umfassen. Mittels der Sensoren 112 und 114 kann eine Relativgeschwindigkeit zum vorausfahrenden Fahrzeug erfasst werden. Eine Fahrgeschwindigkeit des vorausfahrenden Fahrzeugs kann als Summe der mittels Raddrehzahlsensoren 118 erfassten Fahrgeschwindigkeit des Kraftfahrzeugs 100 und der Relativgeschwindigkeit berechnet werden. Die Fahrgeschwindigkeiten können vektoriell erfasst werden, beispielsweise mittels der Stereokamera 114 für das vorausfahrende Fahrzeug bzw. eines Lenkwinkelsensors für das Kraftfahrzeug 100.

Die grafische Darstellung umfasst stets zumindest einen Teil des eigenen Kraftfahrzeugs 100. In jedem Ausführungsbeispiel ermöglicht die perspektivische Darstellung eine grafische Anzeige des eigenen Kraftfahrzeugs 100 im Kontext der Fahraufgabe. Das angezeigte Kraftfahrzeug 100 ist aufgrund der von der Fahrzeugmeldung abhängigen Perspektive und der an der zugeordneten Position angezeigten Fahrzeugmeldung in den Kontext der Fahraufgabe eingebettet.

Der "Kontext der Fahraufgabe" kann Fahrzeugkomponenten des Kraftfahrzeugs 100, Umgebungsbereiche des Kraftfahrzeugs 100 und/oder vom Kraftfahrzeug 100 sensorisch erfasste Objekte umfassen. Indem die Perspektive des angezeigten Kraftfahrzeugs 100 von der der Fahrzeugmeldung zugeordneten Position abhängt, ist das Kraftfahrzeug 100 im Kontext der Fahraufgabe dargestellt. Die Fahrzeugkomponenten, die Umgebungsbereiche und/oder die Objekte können zur der Fahrzeugmeldung zugeordneten Position benachbart sein und/oder in funktionalem (beispielsweise ursächlichem) Zusammenhang mit der Fahrzeugmeldung 104 stehen. Die Fahrzeugkomponenten, die Umgebungsbereiche und/oder die Objekte können im von der Anzeigeeinheit 110 angezeigten Bildausschnitt, beispielsweise in der Fahrzeugmeldung 104, enthalten sein.

Die Steuerungseinheit 108 passt die Perspektive und/oder den Bildausschnitt der perspektivischen Darstellung des Kraftfahrzeugs 100 zum Anzeigen der Fahrzeugmeldung 104 innerhalb der perspektivischen Darstellung dynamisch an den Kontext an. Dadurch fokussiert die Anzeigeeinheit 110 auf die Information, die dem Fahrer im entsprechenden Moment situationsabhängig übermittelt werden soll.

Sowohl externe Signale als auch interne Signale können ursächlich sein für und/oder enthalten sein in der Fahrzeugmeldung 104. Die Fahrzeugmeldung 104 kann durch entsprechende Perspektivenwechsel und/oder Transparenz des Kraftfahrzeugs 100 und/oder durch an der zugeordneten Position in der perspektivischen Darstellung angezeigte Werte und/oder Symbole dargestellt sein.

Die perspektivische Darstellung wird von der Anzeigeeinheit 110 in einer Sichtfläche innerhalb des Kraftfahrzeugs 100 angezeigt. Die Sichtfläche kann mittels eines intransparenten Displays (beispielsweise an einem Kombinationsinstrument des Kraftfahrzeugs 100) oder eines transparenten Head-Up-Displays (beispielsweise projiziert oder reflektiert über eine Frontscheibe des Kraftfahrzeugs 100) realisiert sein. Die Sichtfläche kann sich während der Fahrt im primären Sichtfeld des Fahrers befinden. Aufgrund der von der Fahrzeugmeldung 104 abhängigen Perspektive der Darstellung können viele verschiedene Fahrzeugmeldungen 104 in ihrem jeweiligen Kontext in dieser einen Sichtfläche integriert sein. Verschiedene Funktionalitäten des Kraftfahrzeugs 100 (insbesondere Funktionalitäten der Fahrregelungseinheit 122 und/oder des Kombinationsinstruments), welche jeweils eine Ausgabe an den Fahrer erfordern, können in der einen Anzeigefläche vereint werden. Die an der jeweils zugeordneten Position angezeigte Fahrzeugmeldung 104 kann einen einzelnen Hinweis der Funktionalität und/oder eine fortlaufende Darstellung der Wirkung der Funktionalität umfassen. Der einzelne Hinweis kann eine ereignisgetriebene Fahrzeugmeldung 104 sein. Beispielsweise kann die Fahrzeugmeldung 104 angezeigt werden, wenn von den Sensoren 112 bis 118 gemessene Werte außerhalb eines vorbestimmten Intervalls sind. Die fortlaufende Darstellung der Wirkung der Funktionalität kann beispielsweise das sensorische Erfassen eines vorausfahrenden Fahrzeugs und/oder der Fahrbahnmarkierung anzeigen.

Solange die Perspektive der Darstellung auf eine bestimmte Fahrzeugmeldung 104 gerichtet ist, kann die Steuerungseinheit 108 eine Betätigung der multifunktionalen Bedienelemente 124 der Fahrzeugmeldung 104 bzw. der der Fahrzeugmeldung 104 zugrundeliegenden Funktionalität zuordnen. Dadurch ist eine Interaktion der Vorrichtung 102 mit dem Fahrer ohne ablenkende oder zeitintensive Menüstrukturen ermöglicht.

In jedem Ausführungsbeispiel kann die perspektivische Darstellung des Kraftfahrzeugs 100 dem Fahrer durch die auf die zugeordnete Position bezogene Perspektive klar vermitteln, dass es sich nicht um verschiedene, unabhängige Anzeigen handelt, sondern immer um das Kraftfahrzeug 100, das sich im jeweiligen Kontext der Fahrzeugmeldung 104 perspektivisch bewegt.

Durch die von der Fahrzeugmeldung 104 abhängige Perspektive ist die momentane Darstellung auf die relevante Situation fokussiert. Diese perspektivische Darstellung kann mit glatten Bewegungen, z.B. Veränderungen der Bildachse, des Bildausschnitts und/oder der Brennweite ("Zoom") in verschiedene Perspektiven erreicht werden.

Schaltet der Fahrer eine Regelung oder Funktionalität der Fahrregelungseinheit 122 ein, wird die aktivierte Wirkung (beispielsweise die von der Regelung geregelte Größe) und optional speziellen Einstellungen bezüglich dieser Regelung oder Funktionalität (beispielsweise Parameter der Regelung) in der Fahrzeugmeldung 104 anhand der perspektivischen Darstellung des Kraftfahrzeugs 100 dargestellt. Die Regelung oder Funktionalität der Fahrregelungseinheit 122 kann einen abstandsregelnden Tempomaten (auch "Adaptive Cruise Control" oder ACC) oder einen Spurhalteassistent (auch "Lane Guard System" oder LGS) umfassen.

Beispielsweise wird bei Aktivierung des abstandsregelnden Tempomaten das Kraftfahrzeug 100 und das vorausfahrende Fahrzeug zusammen in der perspektivischen Darstellung dargestellt. Der Blickpunkt der perspektivischen Darstellung ist näher am Kraftfahrzeug 100 als am vorausfahrenden Fahrzeug. Die angezeigte Wirkung des abstandsregelnden Tempomaten kann ein Hervorheben oder ein (beispielsweise symbolisches oder numerisches) Anzeigen des Ist-Abstands (beispielsweise als sensorisch erfassten Wert) oder des Soll-Abstands (beispielsweise als durch die Bedienelemente 124 gesetzten Wert) zum vorausfahrenden Fahrzeug umfassen.

Beispielsweise wird bei Aktivierung des Spurhalteassistenten das Kraftfahrzeug 100 und die Fahrspur zusammen in der perspektivischen Darstellung dargestellt. Die angezeigte Wirkung des Spurhalteassistenten kann ein (beispielsweise farbliches) Hervorheben der Fahrbahnmarkierung (auch: Spurlinien) umfassen. Bei aktiviertem Spurhalteassistent wird dem Fahrer beim Überfahren einer Spurlinie in der perspektivischen Darstellung eine entsprechende Warnung angezeigt (beispielsweise als ereignisgetriebene Fahrzeugmeldung 104).

Auf diese Weise können sämtliche Fahrzeugmeldungen 104 (beispielsweise sämtliche funktionsbezogenen Meldungen und/oder sämtliche Warnhinweise) in der perspektivischen Darstellung des Kraftfahrzeugs 100 (beispielsweise in der Umgebung des Kraftfahrzeugs 100 und/oder im Kontext der zugehörigen Komponenten des Kraftfahrzeugs 100) ausgeben werden.

Die Vorrichtung 102 kann eine kompakte, anschauliche und leicht interpretierbare Darstellung der Daten (beispielsweise zahlreiche interne und externe Signale) aus der Vielzahl von Quellen (beispielsweise von den Sensoren und Einheiten 112 bis 122) ermöglichen. Durch die fokussierte Darstellung mittels der veränderlichen Perspektive und/oder durch die stetige Veränderung der Perspektive kann eine Vielzahl von Daten, insbesondere die zahlreichen und speziellen Daten in Nutzfahrzeugen, dem Fahrer angezeigt werden, ohne die Aufmerksamkeit des Fahrers verkehrsgefährdender Weise zu stören.

Grundsätzlich kann jede notwendige Information, die dem Fahrer durch Anzeigen vermittelt werden soll, von der Steuerungseinheit 108 verarbeitet und mittels der Anzeigeeinheit 110 in der perspektivischen Darstellung als Fahrzeugmeldung 104 angezeigt werden. Dadurch können die Fahrzeugmeldungen 104 immer im relevanten Kontext (innerhalb und außerhalb) des perspektivisch dargestellten Kraftfahrzeugs 100 angezeigt werden.

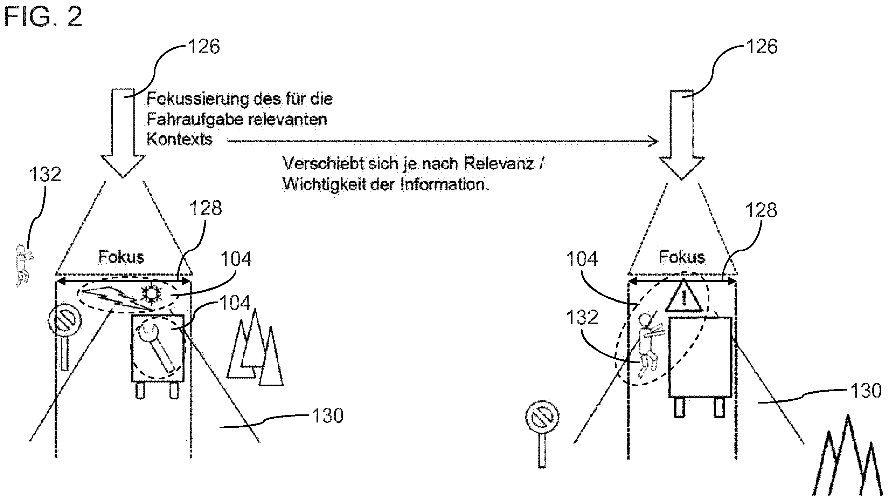

Figur 2 zeigt schematisch die Veränderung der Perspektive, in welcher das Kraftfahrzeug 100 dargestellt wird, gemäß einer ersten Implementierung der Vorrichtung 102. Figur 2 zeigt dabei nicht die von der Anzeigeeinheit 110 angezeigte perspektivische Darstellung, sondern wie die Steuereinheit 108 abhängig von der Fahrzeugmeldung 104 die Perspektive für die perspektivische Darstellung bestimmt. Die Implementierung kann zumindest einzelne Merkmale des Ausführungsbeispiels der Figur 1 umfassen.

Die Perspektive ist durch eine Bildachse 126 und einen Bildausschnitt 128 bestimmt. In dem in Figur 2 gezeigten Beispiel verändert sich der Bildausschnitt 128 (gezeigt als Übergang von der linken Figurenhälfte zur rechten Figurenhälfte). Die Bildachse 126 bleibt (beispielsweise bis auf Parallelverschiebung) gleich.

Grundsätzlich fokussiert die perspektivische Darstellung, d.h. das mittels der Anzeigeeinheit 110 dargestellte Bild, immer den Bereich, der in der jeweiligen Situation relevant ist. D.h. der Fahrer nimmt immer die Perspektive ein, die am günstigsten die relevanten Informationen darstellt, beispielsweise die Fahrzeugmeldung 104 und deren räumlichen Bezug zum Kraftfahrzeug 100). Dabei ist das eigene Kraftfahrzeug 100, beispielsweise ein LKW, immer vollständig oder ausschnittsweise dargestellt. Optional nimmt das eigene Kraftfahrzeug 100 dabei verschiedene Zustandsformen (beispielsweise durch die Transparenz bestimmter Fahrzeugkomponenten) an.

In einer ersten Perspektive ist der Bildausschnitt 128 größer (beispielsweise quer zur Fahrtrichtung) als in einer zweiten Perspektive. Aufgrund des größeren Bildausschnitts 128 umfasst die perspektivische Darstellung der ersten Perspektive (neben dem Kraftfahrzeug 100) Verkehrsschilder am Rand oder über der Fahrbahn 130 und/oder die vorausliegende Fahrbahn 130. Die erste Fahrzeugmeldung 104 umfasst Symbole zur Witterung (beispielsweise Sichtweite und/oder Glatteis), die an der vorausliegenden Fahrbahn 130 als der zugeordneten Position angezeigt sind. Alternativ oder zusätzlich kann in der ersten Fahrzeugmeldung 104 durch ein Symbol am Kraftfahrzeug 100 als der zugeordneten Position ein Wartungsbedarf des Kraftfahrzeugs 100 angezeigt sein.

Betritt ein Fußgänger als Beispiel für ein von den Sensoren und/oder Einheiten 112 bis 122 erfasstes Objekt 132 den vorausliegenden Fahrweg 130, erzeugt dieses Ereignis eine zweite Fahrzeugmeldung 104. Die zweite Fahrzeugmeldung 104 umfasst ein Warnsymbol an der vorausliegenden Fahrbahn und/oder ein Symbol, welches das sensorisch erfasste Objekt 132 schematisch darstellt.

Optional ist jeder Fahrzeugmeldung 104 eine numerische Priorität zugeordnet. Das Auftreten einer zweiten Fahrzeugmeldung 104, deren Priorität höher ist als die Priorität der bereits angezeigten ersten Fahrzeugmeldung 104, kann zum Ausblenden der ersten Fahrzeugmeldung 104 führen. Alternativ oder ergänzend wird die Perspektive abhängig von der Fahrzeugmeldung mit der höchsten Priorität bestimmt.

Im in Figur 2 gezeigten Beispiel ist der Bildausschnitt 128 der zweiten Perspektive ausschließlich aufgrund der zweiten Fahrzeugmeldung 104 bestimmt. Der Bildausschnitt 128 der zweiten Perspektive umfasst das Kraftfahrzeug 100 und den schematisch dargestellten Fußgänger 132.

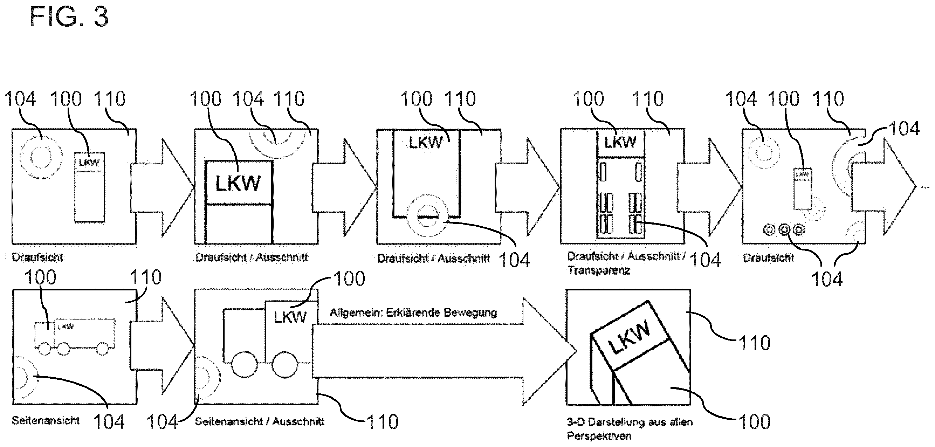

Figur 3 zeigt schematisch eine Folge von Veränderungen der perspektivischen Darstellung an der Anzeigeeinheit 110 der Vorrichtung 102 gemäß einer zweiten Implementierung, die mit der ersten Implementierung kombinierbar ist.

In Reaktion auf die erhaltene Fahrzeugmeldung 104 wechselt jeweils die Perspektive und/oder die (beispielsweise Komponenten-selektive) Transparenz des Kraftfahrzeugs 100. Der Wechsel ist in der Figur 3 jeweils durch einen weißen Pfeil nach rechts dargestellt. Dadurch fokussiert die Anzeigeeinheit 110 auf den für die Fahrzeugmeldung 104 jeweils relevanten und/oder priorisierten Bildausschnitt.

Die Perspektive (beispielsweise der dargestellte Bildausschnitt) und/oder die Transparenz richtet sich nach der Art der Fahrzeugmeldung 104, beispielsweise der zugeordneten Position und/oder einem zugeordneten Meldungstyp. Beispielsweise kann die Steuerungseinheit 108 die Perspektive und/oder die Transparenz abhängig vom zugeordneten Meldungstyp bestimmen. Die von der Steuerungseinheit 108 bestimmbaren Meldungstypen können eine Informationsanzeige, eine Warnanzeige, eine Einstellungsmöglichkeit (beispielsweise mittels der Bedienelemente 124 am Lenkrad) und/oder eine Werkstattmeldung umfassen.

Falls mehrere Fahrzeugmeldungen 104 (beispielsweise Fahrzeugmeldungen 104 gleicher Priorität) gleichzeitig anzuzeigen sind, kann die Steuerungseinheit 108 die Bildachse auf einen räumlichen Mittelpunkt der jeweils zugeordneten Positionen richten. Falls mehrere Fahrzeugmeldungen 104 unterschiedlicher Priorität erhalten werden, kann die Steuerungseinheit 108 die Bildachse auf die der Fahrzeugmeldung 104 mit der höchsten Priorität zugeordneten Positionen oder auf einen räumlichen Schwerpunkt der jeweils zugeordneten Positionen richten. Für die Berechnung des räumlichen Schwerpunkts ist jede Position gemäß der jeweiligen Priorität gewichtet.

Durch den stetigen Wechsel der Perspektive wird der Fahrer nicht durch sprunghafte Anzeigenwechsel abgelenkt. Blickt der Fahrer auf die Sichtfläche, ist der Aufwand bei der Interpretation der Darstellung verringert, da trotz unterschiedlicher Ansichten immer das eigene Kraftfahrzeug 100 im Fokus der Anzeigeeinheit 110 steht.

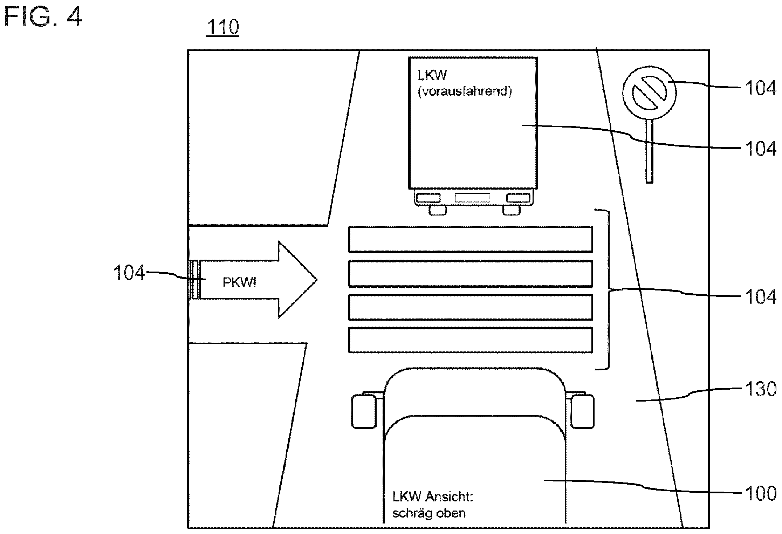

Figur 4 zeigt schematisch die perspektivische Darstellung mittels der Anzeigeeinheit 110 gemäß einer dritten Implementierung, die mit vorstehenden Implementierungen und Ausführungsbeispielen kombinierbar ist.

Der Bildausschnitt fokussiert immer den Bereich, der in der jeweiligen Situation relevant ist. Die Fahrzeugmeldungen 104 umfassen jeweils eine Kennzeichnung (z.B. ein Symbol) im Kontext des Kraftfahrzeugs 100. Für die perspektivische Darstellung der Figur 4 hat die Steuerungseinheit 108 eine Vogelperspektive bestimmt. Die Bildachse (d.h. Blickrichtung) ist in einer vertikalen Ebene, die parallel zu Fahrrichtung des Kraftfahrzeugs 100 ist. Die Bildachse ist zur Horizontalen nach unten geneigt (d.h. die Ansicht ist von hinten oben nach vorne unten). Der Blickpunkt ist in vertikaler Richtung über dem Kraftfahrzeug 100. Die perspektivische Darstellung umfasst das Kraftfahrzeug 100 und das vorausfahrende Fahrzeug (beispielsweise einen LKW) als sensorisch erfasstes Objekt 132.

Beispielsweise wird an der linken und/oder rechten Seite der perspektivischen Darstellung eine Fahrzeugmeldung 104 zur Schilderkennung, eine Fahrzeugmeldung 104 zu Warnungen (z.B. vor einem Fußgänger), eine Fahrzeugmeldung 104 zum Erkennungsstatus der Seitenlinien, eine Fahrzeugmeldung 104 zu Warnungen eines Kreuzungsassistenten und/oder eine Fahrzeugmeldung 104 mit Informationen zur weiteren Umgebung des Kraftfahrzeugs 100 (z.B. Tankstelle) angezeigt.

Alternativ oder ergänzend ist in der Mitte der perspektivischen Darstellung eine Fahrzeugmeldung 104 bezüglich des Abstands zum vorausfahrenden Fahrzeug 132 angezeigt. Die Fahrzeugmeldung 104 kann eine Warnung (beispielsweise bei Unterschreiten eines Mindestabstands) oder einen nummerisch und/oder symbolisch angezeigten Ist-Wert oder SollWert des Abstands umfassen. Der Abstand kann durch eine dem Wert entsprechende Anzahl an Balken quer zur Fahrtrichtung zwischen dem Kraftfahrzeug 100 und dem vorausfahrenden Fahrzeug 132 angezeigt sein. Die Fahrzeugmeldung 104 zum Abstand kann zugleich eine Einstellungsmöglichkeit sein, beispielsweise Stufen des ACCs. Die auf dem vorausliegenden Fahrweg positionierte Fahrzeugmeldung 104 kann eine Warnung vor Hindernissen oder Fußgängern umfassen. Ferner kann die auf dem vorausliegenden Fahrweg positionierte Fahrzeugmeldung 104 Fahrbahnmarkierungen wiedergeben (beispielsweise Vorankündigungspfeile).

Beispielsweise berechnet die Steuerungseinheit 108 oder die Fahrregelungseinheit 122 Trajektorien des Kraftfahrzeugs 100 und eines sensorisch erfassten Verkehrsteilnehmers voraus. Weisen die vorausberechneten Trajektorien einen Kollisionspunkt auf, wird die Fahrzeugmeldung 104 angezeigt. Beispielsweise ist die Fahrzeugmeldung 104 an der dem Kollisionspunkt in der perspektivischen Darstellung zugeordneten Position angezeigt und/oder die Fahrzeugmeldung 104 umfasst einen Pfeil, der an der aktuellen Position des sensorisch erfassten Verkehrsteilnehmers angeordnet ist und die Richtung der aktuellen Fahrgeschwindigkeit des sensorisch erfassten Verkehrsteilnehmers angibt.

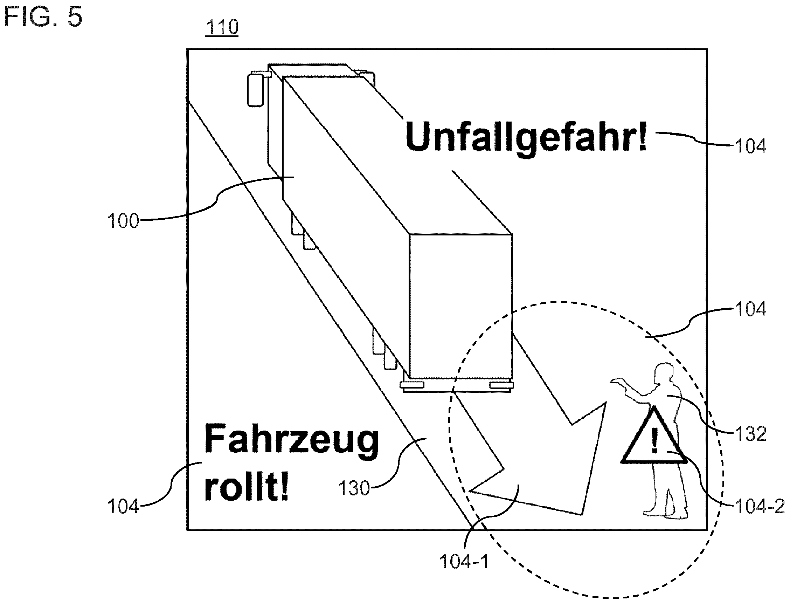

Figur 5 zeigt schematisch eine vierte Implementierung der von den Fahrzeugmeldungen 104 abhängigen Perspektive. Die vierte Implementierung ist mit vorstehenden Implementierungen und Ausführungsbeispielen kombinierbar. Die von der Steuerungseinheit 108 festgestellte oder erhaltene Fahrzeugmeldung 104 betrifft ein unbemerktes Rückwärtsrollen des Kraftfahrzeugs 100. Das Rollen wird beispielsweise durch die Raddrehzahlsensoren 118 bei ausgeschaltetem Antrieb festgestellt.

Dieser Fahrzeugmeldung sind eine hohe Priorität und das Kraftfahrzeug 100 (beispielsweise dessen Heck) als räumliche Position zugeordnet. Folglich fokussiert die Steuerungseinheit 108 die Perspektive auf das komplette Kraftfahrzeug 100. Die Fahrzeugmeldung 104 kann einen Pfeil 104-1 in die Rückwärtsrichtung, ein Warnsymbol 104-2 und/oder Textfelder "Unfallgefahr!" und/oder "Fahrzeug rollt!" umfassen.

Das Kraftfahrzeug 100 ist in der perspektiven Darstellung in Hanglage und rückwärts rollend dargestellt. Die perspektivische Darstellung ist auf das Heck des Kraftfahrzeugs 100 gerichtet (d.h. der Blickpunkt ist hinter dem Kraftfahrzeug 100) und umfasst den Gefahrenbereich des Fahrwegs 130 hinter dem Kraftfahrzeug 100. Beispielhaft befindet sich im Gefahrenbereich ein Fußgänger, der als sensorisch erfasstes Objekt 132 angezeigt wird. Hierzu kann die Bildachse der Perspektive gegenüber einer vertikalen und zur Längsrichtung des Kraftfahrzeugs parallelen Ebene in Richtung des erfassten Objekts 132 geneigt sein.

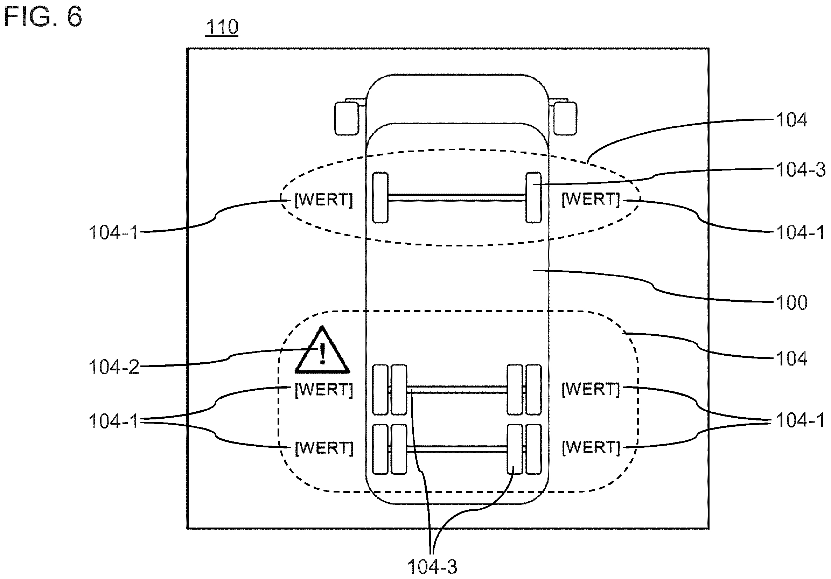

Figur 6 zeigt schematisch eine von Fahrzeugmeldungen 104 abhängige Draufsicht (oder eine Perspektive von schräg oben) des teilweise transparent dargestellten Kraftfahrzeugs 100 gemäß einer fünften Implementierung, die mit vorstehenden Implementierungen und Ausführungsbeispielen kombinierbar ist. Die Fahrzeugmeldungen 104 zeigen einen Status von Fahrzeugkomponenten 104-3 innerhalb des Kraftfahrzeugs 100 an. Dies ist ein Beispiel für die Ausgabe von Fahrzeugmeldungen 104 zu Fahrzeugkomponenten 104-3 in einem von außen nicht sichtbaren Bereich des Kraftfahrzeugs 100. In der perspektivischen Darstellung des Kraftfahrzeugs 100 werden in diesem Fall Fahrzeugkomponenten transparent, die zwischen Blickpunkt und zugeordneter Position angeordnet sind. Die zugeordnete Position kann wie in den vorstehenden Implementierungen die Perspektive bestimmen, insbesondere kann die betreffende Stelle des Kraftfahrzeugs 100 in der perspektivischen Darstellung fokussiert sein.

Die Fahrzeugmeldung 104 umfasst von den Sensoren (beispielsweise Reifendruck oder Höhe der Luftfederung) erfasste Werte 104-1. Die erfassten Werte 104-1 sind jeweils in räumlicher Zuordnung zu den schematisch dargestellten Fahrzeugkomponenten 104-3 angeordnet. Falls ein sensorisch erfasster Wert außerhalb eines vorbestimmten Normintervalls liegt, wird zusätzlich in räumlicher Zuordnung zu derjenigen Fahrzeugkomponente 104-3 ein Warnsymbol 104-2 angezeigt.

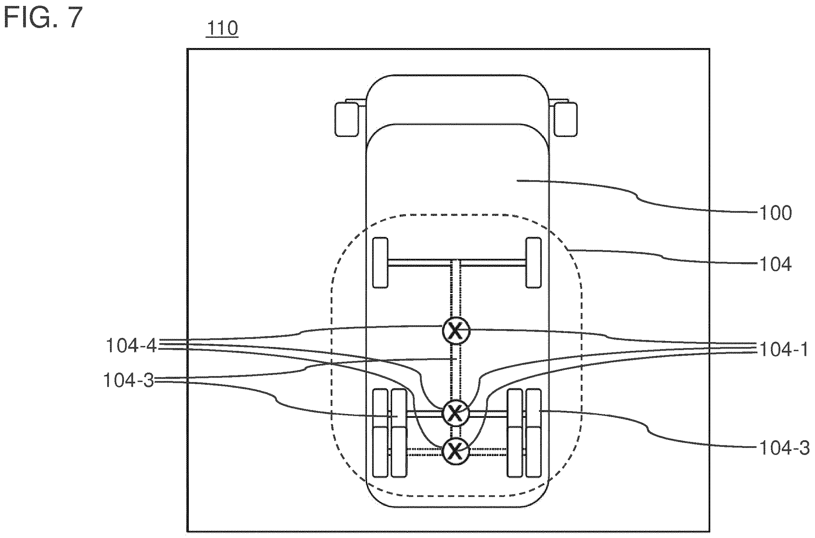

Figur 7 zeigt schematisch eine weitere Implementierung der Sichtfläche an der Anzeigeeinheit 110, die mit vorstehenden Implementierungen und Ausführungsbeispielen kombinierbar ist. Die in Figur 7 gezeigte Fahrzeugmeldung 104 umfasst eine Einstellmöglichkeit (beispielsweise mittels der Bedienelemente 124).

Die Fahrzeugmeldung 104 umfasst mindestens eine einstellbare Fahrzeugkomponente 104-4, deren Zustand 104-1 symbolisch angezeigt wird. Das an der zugeordneten Position angeordnete Symbol der einstellbaren Fahrzeugkomponente 104-4 vermittelt dem Fahrer durch die Positionsangabe die Einstellmöglichkeit. Ferner umfasst die Fahrzeugmeldung 104 mindestens eine der einstellbaren Fahrzeugkomponente 104-4 funktional zugehörige Fahrzeugkomponente 104-3. Die funktional zugehörige Fahrzeugkomponente 104-3 verdeutlicht dem Fahrer Funktion und Wirkungsbereich der Einstellmöglichkeit.

Im in Figur 7 gezeigten Beispiel ist die einstellbare Fahrzeugkomponente 104-4 ein sperrbares Differenzialgetriebe. Die funktional zugehörige Fahrzeugkomponente 104-3 umfasst Wellen des Antriebstrangs und/oder Achsen, die mit dem Differenzialgetriebe verbunden sind. Das Kraftfahrzeug 100 ist in Ebenen oberhalb des Antriebstrangs transparent dargestellt. Die Bildachse ist in einer vertikalen Ebene, die zur Fahrtrichtung parallel ist.

Figur 8 ist eine fotografische Darstellung eines Fahrerarbeitsplatzes 106 mit einem Ausführungsbeispiel der Vorrichtung 102. Im Ausführungsbeispiel der Figur 8 ist die Sichtfläche der Anzeigeeinheit 110 in einem Kombinationsinstrument eines LKWs als Kraftfahrzeug 100 realisiert.

Der LKW 100 hat die ACC-Funktionalität der Fahrregelungseinheit 122 aktiviert, deren Fahrzeugmeldung 104 als fortlaufende Wirkungsangabe in der perspektivischen Darstellung zwischen dem Kraftfahrzeug 100 und dem vorausfahrenden Fahrzeug angezeigt ist. Die ACC-Fahrzeugmeldung 104 umfasst das vorausfahrende Fahrzeug und gibt sensorisch erfasste Ist-Werte zum Abstand zwischen Kraftfahrzeug 100 und vorausfahrendem Fahrzeug sowie Fahrgeschwindigkeiten des Kraftfahrzeugs 100 und des vorausfahrenden Fahrzeugs aus.

Gleichzeitig erhält die Steuerungseinheit 108 eine weitere Fahrzeugmeldung 104 als ereignisgetriebene Warnmeldung der LGS-Funktionalität der Fahrregelungseinheit 122, die angibt, dass der LKW 100 Gefahr läuft, auf die Gegenspur zu geraten. Hierzu umfasst die angezeigte Fahrzeugmeldung 104 textbasierte und symbolische Warnhinweise 104-2 sowie eine Hervorhebung 104-1 einer zu dichten oder überfahrenen Spurlinie.

Der Fokus der perspektivischen Darstellung liegt auf der jeweiligen situativ relevanten Situation. Im Ausführungsbeispiel der Figur 8 hat der Fahrer die ACC-Funktionalität aktiviert und Einstellungen zum Abstand vorgenommen. Dabei wurde der Fahrer beim Fahren abgelenkt und hat sich der Gegenfahrbahn genähert. Aus diesem Grund erscheint im angezeigten Kontext, d.h. der bestehenden perspektivischen Darstellung, eine Warnung als Fahrzeugmeldung 104 mit Kennzeichnung 104-1 des Fahrbahnrands. Der Fahrer hat dadurch einen genauen Überblick seiner Umgebung und wird die Warnung mit hoher Wahrscheinlichkeit nicht fehlinterpretieren oder übersehen.

Die Vorrichtung 102 kann entsprechend in einem PKW eingesetzt werden.

Anhand vorstehender exemplarischer Ausführungsbeispiele und Implementierungen ist dem Fachmann ersichtlich, dass die Vorrichtung die Beseitigung folgende Nachteile des Stands der Technik ermöglichen kann. Herkömmliche Signale erscheinen häufig aus dem Zusammenhang gerissen im Kombinationsinstrument des Fahrers und führen so zu Verständnisschwierigkeiten. Herkömmliche Signale begünstigen Fehlinterpretationen, da sie abstrakt und ohne konkreten Bezug (beispielsweise durch Icons) angezeigt werden. Ein mühsames Nachschlagen der Bedeutung des jeweiligen Signals unterbricht die Fahrt und bedeutet einen Zeitverlust. Insbesondere während der Fahrt können Fehlinterpretation von abstrakten Signalen zum Sicherheitsproblem werden.

Dagegen können Ausführungsbeispiele und Implementierungen der Vorrichtung folgende Vorteile erreichen. Die angepasste perspektivische Darstellung der Fahrzeugmeldungen im entsprechenden räumlichen Kontext erleichtert deren Interpretation. Unterschiedliche Meldungstypen (beispielsweise sicherheitsrelevante Meldungen und Komfortaspekte) sind innerhalb einer Sichtfläche gebündelt. Der Wirkbereich der Fahrzeugmeldung ist eindeutig erkennbar. Eine Fehlbedienung wird dadurch vermieden. Durch die eindeutige und konsistente Darstellung ist eine schnelle Reaktion auf die jeweilige Fahrzeugmeldung ermöglicht. Die Sicherheit, insbesondere während der Fahrt, wird durch die eindeutige und konsistente Fahrzeugmeldung erhöht. Durch die angepasste Perspektive können eine Vielzahl unterschiedlicher Fahrzeugmeldungen in einer Sichtfläche der Anzeigeeinheit platzersparend und im Sichtfeld des Fahrers ausgegeben werden.

Obwohl die Erfindung unter Bezugnahme auf bestimmte Ausführungsbeispiele beschrieben worden ist, ist es für den Fachmann ersichtlich, dass verschiedene Änderungen vorgenommen werden können und Äquivalente als Ersatz verwendet werden können. Ferner können viele Modifikationen vorgenommen werden, um eine bestimmte Situation und/oder einen bestimmten Funktionsumfang an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Kraftfahrzeug
- 102: Vorrichtung zur Ausgabe von Fahrzeugmeldungen
- 104: Fahrzeugmeldungen
- 104-1: Erfasster Zustand
- 104-2: Warnhinweis
- 104-3: Zugehörige Fahrzeugkomponente
- 104-4: Einstellbare Fahrzeugkomponente
- 106: Fahrerplatz
- 108: Steuerungseinheit
- 110: Anzeigeeinheit
- 112: Radarsensor
- 114: Stereokamera
- 116: Ultraschallsensor
- 118: Raddrehzahlsensor
- 120: Sensorfusionseinheit
- 122: Fahrregelungseinheit
- 124: Bedienelemente am Lenkrad
- 126: Bildachse
- 128: Bildausschnitt
- 130: Fahrweg oder Fahrbahn
- 132: Erfasstes Objekt

## Patentansprüche

1. Vorrichtung (102) zur Ausgabe von Fahrzeugmeldungen (104) an einem Fahrerplatz (106) eines Kraftfahrzeugs (100), umfassend:
eine Steuerungseinheit (108), die dazu ausgebildet ist, eine oder mehrere Fahrzeugmeldungen (104) von einer Vielzahl von Quellen (112-124) des Kraftfahrzeugs (100) zu erhalten und jeweils einer räumlichen Position relativ zum Kraftfahrzeug (100) zuzuordnen; und
eine von der Steuerungseinheit (108) gesteuerte Anzeigeeinheit (110), die dazu ausgebildet ist, eine perspektivische Darstellung des Kraftfahrzeugs (100) mit mindestens einer der erhaltenen Fahrzeugmeldungen (104) an der zugeordneten räumlichen Position anzuzeigen, wobei die angezeigte Perspektive des Kraftfahrzeugs (100) von der zugeordneten räumlichen Position abhängt, wobei die Fahrzeugmeldung (104) angezeigt wird durch eine hervorgehobene Fahrzeugkomponente (104-3) an der zugeordneten räumlichen Position.

2. Vorrichtung nach Anspruch 1, wobei die Fahrzeugmeldung (104) angezeigt wird durch ein Symbol (104-1; 104-2) an der zugeordneten räumlichen Position.

3. Vorrichtung nach einem der Ansprüche 1 oder 2, wobei die Anzeigeeinheit (110) ferner dazu ausgebildet ist, die Perspektive in Reaktion auf die Fahrzeugmeldung (104) stetig zu verändern.

4. Vorrichtung nach einem der Ansprüche 1 bis 3, wobei die Perspektive bestimmt ist durch eine Bildachse (126) und/oder einen Bildausschnitt (128).

5. Vorrichtung nach einem der Ansprüche 1 bis 4, wobei die Perspektive bestimmt ist durch einen Bildausschnitt (128), dessen Größe von einer Größe der darin angezeigten Fahrzeugmeldung abhängt.

6. Vorrichtung nach einem der Ansprüche 1 bis 5, wobei die Perspektive bestimmt ist durch eine Bildachse (126), auf welcher die zugeordnete räumliche Position und ein Mittelpunkt des Kraftfahrzeugs (100) liegen.

7. Vorrichtung nach einem der Ansprüche 1 bis 5, wobei die Perspektive bestimmt ist durch eine Bildachse (126), die senkrecht zu einer Verbindungslinie der zugeordnete räumliche Position und eines Mittelpunkts des Kraftfahrzeugs (100) ist.

8. Vorrichtung nach einem der Ansprüche 1 bis 7, wobei die Fahrzeugmeldung (104) eine Warnmeldung (104-2) zu einem Rückwärtsrollen des Kraftfahrzeugs umfasst, und die zugeordnete räumliche Position ein Heck des Kraftfahrzeugs und/oder einen Fahrweg (132) hinter dem Kraftfahrzeug (100) umfasst.

9. Vorrichtung nach einem der Ansprüche 1 bis 8, wobei die zugeordnete räumliche Position von der Quelle (112-124) der Fahrzeugmeldung (104) abhängig ist.

10. Vorrichtung nach einem der Ansprüche 1 bis 9, wobei die Quelle (112-124) der Fahrzeugmeldung einen Sensor umfasst und die Fahrzeugmeldung einen vom Sensor erfassten oder davon abgeleiteten Wert (104-1) umfasst.

11. Vorrichtung nach einem der Ansprüche 1 bis 10, wobei die Quelle (112-124) der Fahrzeugmeldung einen Sensor zur Erfassung eines Abstands und/oder einer Geschwindigkeit eines Objekts (132) in der Umgebung des Kraftfahrzeugs umfasst, die zugeordnete räumliche Position eine Position des Sensors oder des Objekts (132) umfasst, und die Fahrzeugmeldung (104) einen Wert des erfassten Abstands und/oder der erfassten Geschwindigkeit umfasst.

12. Vorrichtung nach einem der Ansprüche 1 bis 11, wobei die Steuerungseinheit (108) und/oder die Anzeigeeinheit (110) ferner dazu ausgebildet sind, bei Abwesenheit einer Fahrzeugmeldung (104) und/oder nach einer Bestätigung der angezeigten Fahrzeugmeldung (104) die perspektivische Darstellung des Kraftfahrzeugs (100) anzuzeigen mit einer vom Betriebszustand des Kraftfahrzeugs (100) abhängigen Perspektive.

13. Vorrichtung nach einem der Ansprüche 1 bis 12, wobei die Anzeigeeinheit (110) ein Kombinationsinstrument und/oder ein Sekundärdisplay umfasst.

14. Kraftfahrzeug (100), insbesondere ein Nutzfahrzeug, umfassend eine Vorrichtung (102) gemäß einem der Ansprüche 1 bis 13.

## Claims

1. An apparatus (102) for outputting vehicle messages (104) at a driving position (106) of a motor vehicle (100), comprising:
a control unit (108) which is designed to receive one or more vehicle messages (104) from a multiplicity of sources (112-124) of the motor vehicle (100) and to respectively assign them to a spatial position relative to the motor vehicle (100); and
a display unit (110) which is controlled by the control unit (108) and is designed to display a perspective representation of the motor vehicle (100) with at least one of the received vehicle messages (104) at the assigned spatial position, wherein the displayed perspective of the motor vehicle (100) depends on the assigned spatial position, wherein the vehicle message (104) is displayed by means of a highlighted vehicle component (104-3) at the assigned spatial position.

2. The apparatus according to Claim 1, wherein the vehicle message (104) is displayed by means of a symbol (104-1; 104-2) at the assigned spatial position.

3. The apparatus according to either of Claims 1 and 2, wherein the display unit (110) is also designed to continuously change the perspective in response to the vehicle message (104).

4. The apparatus according to one of Claims 1 to 3, wherein the perspective is determined by an image axis (126) and/or an image section (128).

5. The apparatus according to one of Claims 1 to 4, wherein the perspective is determined by an image section (128), the size of which depends on the size of the vehicle message displayed therein.

6. The apparatus according to one of Claims 1 to 5, wherein the perspective is determined by an image axis (126), on which the assigned spatial position and a centre of the motor vehicle (100) lie.

7. The apparatus according to one of Claims 1 to 5, wherein the perspective is determined by an image axis (126) which is perpendicular to a connecting line of the assigned spatial position and a centre of the motor vehicle (100).

8. The apparatus according to one of Claims 1 to 7, wherein the vehicle message (104) comprises a warning message (104-2) relating to backwards rolling of the motor vehicle, and the assigned spatial position comprises a rear of the motor vehicle and/or a road (132) behind the motor vehicle (100) .

9. The apparatus according to one of Claims 1 to 8, wherein the assigned spatial position is dependent on the source (112-124) of the vehicle message (104) .

10. The apparatus according to one of Claims 1 to 9, wherein the source (112-124) of the vehicle message comprises a sensor, and the vehicle message comprises a value (104-1) captured by the sensor or derived therefrom.

11. The apparatus according to one of Claims 1 to 10, wherein the source (112-124) of the vehicle message comprises a sensor for capturing a distance and/or a speed of an object (132) in the environment of the motor vehicle, the assigned spatial position comprises a position of the sensor or of the object (132), and the vehicle message (104) comprises a value of the captured distance and/or of the captured speed.

12. The apparatus according to one of Claims 1 to 11, wherein the control unit (108) and/or the display unit (110) is/are also designed to display the perspective representation of the motor vehicle (100) with a perspective dependent on the operating state of the motor vehicle (100) in the absence of a vehicle message (104) and/or after confirmation of the displayed vehicle message (104).

13. The apparatus according to one of Claims 1 to 12, wherein the display unit (110) comprises a combination instrument and/or a secondary display.

14. A motor vehicle (100), in particular a commercial vehicle, comprising an apparatus (102) according to one of Claims 1 to 13.

## Revendications

1. Dispositif (102) pour délivrer des messages de véhicule (104) au niveau d'un poste de conducteur (106) d'un véhicule automobile (100), comprenant :
une unité de commande (108), qui est configurée pour obtenir un ou plusieurs messages de véhicule (104) de la part d'une pluralité de sources (112-124) du véhicule automobile (100) et associer respectivement une position dans l'espace par rapport au véhicule automobile (100) ; et
une unité d'affichage (110) commandée par l'unité de commande (108), laquelle est configurée pour afficher une représentation en perspective du véhicule automobile (100) avec au moins l'un des messages de véhicule (104) obtenus à la position dans l'espace associée, la perspective affichée du véhicule automobile (100) dépendant de la position dans l'espace associée, le message de véhicule (104) étant affiché par un composant de véhicule (104-3) mis en valeur au niveau de la position dans l'espace associée.

2. Dispositif selon la revendication 1, le message de véhicule (104) étant affiché par un symbole (104-1 ; 104-2) au niveau de la position dans l'espace associée.

3. Dispositif selon l'une des revendications 1 ou 2, l'unité d'affichage (110) étant en outre configurée pour modifier continuellement la perspective en réaction au message de véhicule (104).

4. Dispositif selon l'une des revendications 1 à 3, la perspective étant déterminée par un axe d'image (126) et/ou une portion d'image (128).

5. Dispositif selon l'une des revendications 1 à 4, la perspective étant déterminée par une portion d'image (128) dont la taille dépend d'une taille du message de véhicule qui y est affiché.

6. Dispositif selon l'une des revendications 1 à 5, la perspective étant déterminée par un axe d'image (126) sur lequel se trouvent la position dans l'espace associée et un point central du véhicule automobile (100).

7. Dispositif selon l'une des revendications 1 à 5, la perspective étant déterminée par un axe d'image (126) qui est perpendiculaire à une ligne de liaison de la position dans l'espace associée et d'un point central du véhicule automobile (100).

8. Dispositif selon l'une des revendications 1 à 7, le message de véhicule (104) comportant un message d'avertissement (104-2) à propos d'un roulage vers l'arrière du véhicule automobile, et la position dans l'espace associée comprenant un arrière du véhicule automobile et/ou un trajet de déplacement (132) derrière le véhicule automobile (100).

9. Dispositif selon l'une des revendications 1 à 8, la position dans l'espace associée étant dépendante de la source (112-124) du message de véhicule (104).

10. Dispositif selon l'une des revendications 1 à 9, la source (112-124) du message de véhicule comprenant un capteur et le message de véhicule comprenant une valeur (104-1) acquise par le capteur ou dérivée de celle-ci.

11. Dispositif selon l'une des revendications 1 à 10, la source (112-124) du message de véhicule comprenant un capteur destiné à détecter une distance et/ou une vitesse d'un objet (132) dans l'environnement du véhicule automobile, la position dans l'espace associée comprenant une position du capteur ou de l'objet (132) et le message de véhicule (104) comprenant une valeur de la distance détectée et/ou de la vitesse détectée.

12. Dispositif selon l'une des revendications 1 à 11, l'unité de commande (108) et/ou l'unité d'affichage (110) étant en outre configurées pour, en l'absence d'un message de véhicule (104) et/ou après une confirmation du message de véhicule (104) affiché, afficher la représentation en perspective du véhicule automobile (100) avec une perspective dépendante de l'état de fonctionnement du véhicule automobile (100).

13. Dispositif selon l'une des revendications 1 à 12, l'unité d'affichage (110) étant un instrument combiné et/ou un afficheur secondaire.

14. Véhicule automobile (100), notamment véhicule utilitaire, comprenant un dispositif (102) selon l'une des revendications 1 à 13.
